Europäisches Patentamt

European Patent Office

Office européen des brevets

(19)

(11) Publication number: **0 227 114 B1**

# EUROPEAN PATENT SPECIFICATION

(12)

(45) Date of publication of patent specification: 13.03.91　(51) Int. Cl.5: **G02B 6/42**

(21) Application number: 86118021.4

(22) Date of filing: 23.12.86

(54) Method of fabricating an optical device for transmitting light along a predetermined curved path.

(30) Priority: 25.12.85 JP 297054/85
25.12.85 JP 297055/85

(43) Date of publication of application:
01.07.87 Bulletin 87/27

(45) Publication of the grant of the patent:
13.03.91 Bulletin 91/11

(84) Designated Contracting States:
DE FR GB NL SE

(56) References cited:
FR-A- 2 344 856
FR-A- 2 517 076

TOUTE L'ELECTRONIQUE, no. 440, February
1979, pages 47-51, Société des Editions Ra-
dio, Paris, FR; C. ANTOINE: "Nouveaux dé-
veloppements des connecteurs optiques"

IBM TECHNICAL DISCLOSURE BULLETIN, vol.
22, no. 11, April 1980, pages 4857-4858, New
York, US; F.E. NOEL et al.: "High density
fiber-optic transducer modules"

REVIEW OF ELECTRICAL COMMUNICATION
LABORATORIES, vol. 27, no. 11-12,
November/December 1979, pages 966-979,

Tokyo, JP; M. HIRAI et al.: "Splice of optical
fiber and cable"

(73) Proprietor: SUMITOMO ELECTRIC INDUSTRIES
LIMITED
No. 15, Kitahama 5-chome, Higashi-ku
Osaka-shi, Osaka 541(JP)

(72) Inventor: Kuhara, Yoshiki c/o Osaka Works
Sumitomo Electric Ind. Ltd. 1-3, Shimaya
1-chome
Konohana-ku Osaka-shi Osaka(JP)
Inventor: Iguchi, Shinichi c/o Osaka Works
Sumitomo Electric Ind. Ltd. 1-3, Shimaya
1-chome
Konohana-ku Osaka-shi Osaka(JP)

(74) Representative: Patentanwälte Grünecker,
Kinkeldey, Stockmair & Partner
Maximilianstrasse 58
W-8000 München 22(DE)

## Description

The present invention relates to a method of fabricating an optical device for transmitting light along a predetermined curved path wherein an optical fiber is disposed within a support, the optical fiber being adapted for guiding light entering a first end face to a second end face thereof.

Optical fibers are used to transmit light from a light-emitting device to a light-receiving device in the field of light wave communications and optical measurements employing optical fibers. In this technical field, the light-emitting device is indispensable for the purpose of converting an electrical signal to light, and the 1ight-receiving device is indispensable for the purpose of converting light into an electrical signal.

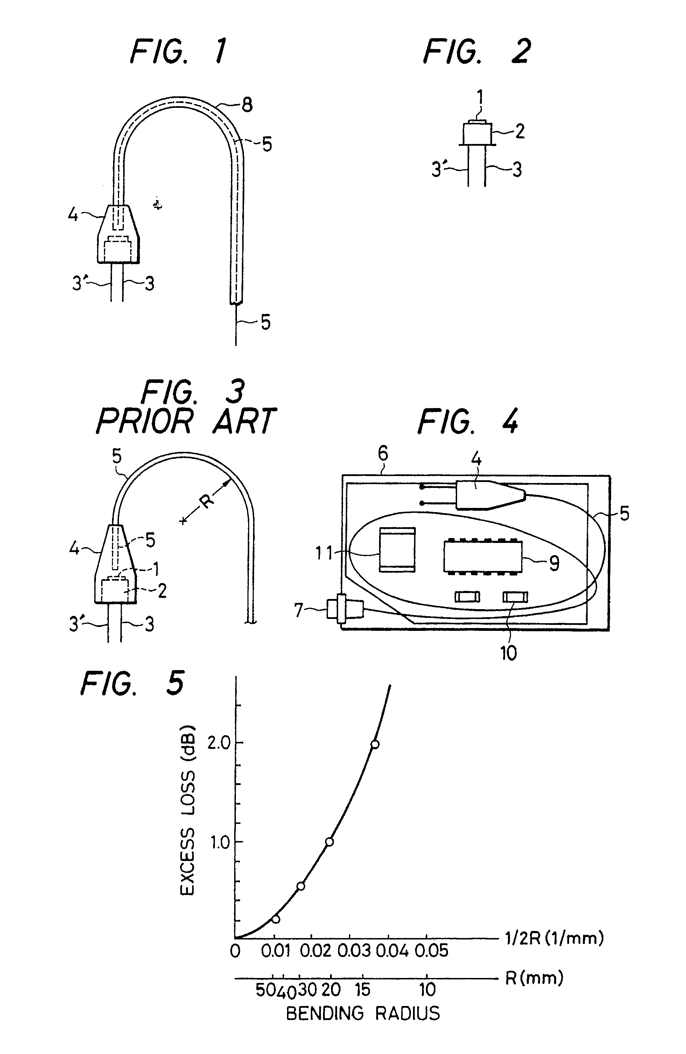

Light-emitting elements are used as single components w hich are separate from optical fibers (as shown in Fifure 2) or as components that are integral with optical fibers (viz. pigtail type which is illustrated in Figure 3). In the first type of device shown in Figure 2, a chip of light-emitting element for converting an electrical signal into light (e.g. a light-emitting diode or a laser) is mounted in a package 2 having a light-transmitting window 1, and an electrical signal applied at electrodes 3,3' is converted into light which is picked up by an external circuit through the window 1. In the second type of device which is shown in Figure 3, a light-emitting element and an optical fiber 5 are secured to each other in a coupling member 4 to form an integral element. Being made integral with a flexible optical fiber, the second type of light-emitting device is capable of picking up light in any desired direction and permits easy handling and great latitude in selecting an appropriate layout for installation in lightwave transmitters or other optical equipment.

Turning to light-receiving device, it is used as single photodetectors which is separate from optical fibers (as shown in Fig. 2) or as components that is integral with optical fiber (viz. pigtail type which is shown in Fig. 3). In the first type of device shown in Fig. 2, a photodiode for converting light to electricity (e.g. Si or Ge based PIN photodiode) is mounted in a package 2 having a light-transmitting window 1, and is illuminated with light that is incident from above. The electrical signal produced is picked up by an external circuit through electrodes 3, 3'. In the second type of device which is shown in Fig. 3, a photodetector and an optical fiber 5 are secured to each other in a coupling member 4 to form an integral element. Being made integral with a flexible optical fiber, the second type of light-receiving device is capable of accepting light in any desired direction and permits easy handling and great latitude in selecting an appropriate layout for installation in lightwave receivers or other optical devices.

In a small-size lightwave transmitter or lightwave receiver, a light-emitting element or light receiving element with an optical fiber is mounted in a housing 6 together with other electronic circuit components 9, 10 and 11 (see Fig. 4). In this instance, the optical fiber is usually wound into a single or more than one loop before it is coupled to an optical fiber connector 7 such that the end of the fiber is drawn to the outside of the housing 6. If desired, the fibre end may be directly drawn out of the housing 6 without using any optical connector although this case is not shown in Fig. 4.

There are several reasons for winding the optical fiber into one or more loops. First, some allowance in fiber length is necessary for providing sease in the handling of the fiber during installation. Second, an allowance in fiber length is also necessary not only for providing convenience in repairing a broken fiber but also for absorbing any expansion or contraction of components of a light transmitter or light receiver that will occur during its use on account of variations in ambient temperature. The outer dimensions of a small-size light transmitter or light receiver typically range from several tens millimeters to approximately 100-200mm. In order to assemble a light-emitting or light receiving element with an optical fiber into a light transmitter or light receiving device having such outer dimensions, the fiber must be bent into loops having radii of curvature that range from 10mm to approximately 100mm.

Conventionally, a light emitting element that is integral with an optical fiber is assembled by establishing alignment between the light-emitting region of the device and the optical fiber which is either disposed substantially linearly or curved to form a gentle bend and by then fixing the fiber in a position that produces a maximum optical output. Further, conventionally, a light-receiving device that is integral with an optical fiber is assembled by establishing alignment between the light-receiving region of the photodetector and the optical fiber which is either disposed substantially linearly or curved to form a gentle bend and by then fixing the fiber in a position that produces a maximum sensitivity. When the so aligned and fixed optical fiber is put to actual use, it is bent into one or more loops which, as already mentioned, have small radii of curvature ranging from 10mm to approximately 100-200mm.

When an optical fiber 5 (Fig. 3) is bent at a portion in the neighbourhood of a coupler 4 in which it is joined to the light-emitting element, the optical output of the latter fluctuates in accordance with the radius of curvature (R) of the bend, and the present inventors have confirmed this fact by actual measurements. Fig. 5 shows the relationship between the reciprocal of R and the excess loss in dB which is defined as a drop in optical output resulting from the use of a bent fiber as compared with the reference output attained from a straight fiber. Further when an optical fiber 5 (Fig. 3) is bent at a portion in the neighbourhood of a coupler 4 in which it is joined to the photodetector, the sensitivity of the light-receiving element fluctuates in accordance with the radius of curvature R of the bend, and the preent inventors have also confirmed this fact by actual measurements. Fig. 5 also shows the relationship between the reciprocal of R and the excess loss in dB which is defined as a drop in sensitivity resulting from the use of the bent fiber as compared with the reference sensitivity attained from a straight fiber.

Obviously, the excess loss for a radius of curvature of 33 mm is 0.5 dB, and increases to 1 dB if the radius of curvature is 20 mm. These are sufficiently great values that cannot be neglected in comparison with the loss that occurs either as a result of splicing of optical fibers or at optical connectors. Such great losses are sure to cause problems in an effort to maximize the performance of lightwave transmitter or light receiving device, or to design an efficient optical system using such transmitter or light receiving device.

The present invention has been accomplished on the basis of the following consideration given by the present inventors with respect to the possible cause of the occurrence of excess loss in the optical output of an optical device. In terms of the light emitting device, when an optical fiber is bent at a portion close to its end, the light-acceptance angle of the fiber end is offset from that of a straight fiber so as to permit a smaller amount of light from the light-emitting element to be coupled to the fiber. The offset in the light-acceptance angle of the fiber is increased as it is bent to produce a progressively smaller radius of curvature. Therefore, the excess loss of the light-emitting element, or the apparent drop in its optical output, increases as the radius of curvature of a bend formed the optical fiber is decreased.

In terms of the light receiving device, when an optical fiber is bent at a portion close to its end, the radiation pattern of light emitted from the fiber end is offset from that of light issuing from the end of a straight fiber so as to permit a smaller amount of light to encounter the photodetector. The offset in radiation pattern of the fiber is increased as it is bent to produce a progressively smaller radius of curvature. Therefore, the excess loss of the light-receiving element, or apparent drop in its sensitivity increases as the radius of curvature of a bend formed in the optical fiber is decreased.

It is therefore, an object of the present invention to solve the abovementioned drawbacks, and to provide an improved optical device such as light-emitting device and light-receiving device each provided with an optical fiber.

Another object of this invention is to provide an improved light-emitting device with optical fiber that will offer a maximum optical output without incurring any excess loss even if the fiber is installed in a bent state.

Still another object of this invention is to provide an improved light-receiving device with optical fiber that will offer a maximum sensitivity without incurring any excess loss even if the fiber is installed in a bent state.

These objects are achieved in accordance with the present inventive method of fabricating an optical device in that the support is bent into a shape corresponding to said predetermined curved path to produce a bent optical fiber, said curved path having a radius of curvature between 20 mm and 200 mm, that the bent optical fiber is disposed with its first end face thereof to face an optical element having a region for transmitting light, and that the first end face of the optical fiber for receiving light is aligned with the region of the optical element such that the optical output of the second end face of said optical fiber is maximum.

The advantage of the present invention consists in that the optical fiber is bent together with the support and that it is held in its finally-achieved bent position by the support and that the alignment of the fiber is only made after the optical fiber has been bent and is held in its predetermined bent position. Hence, it then will be possible to secure the said fiber to the light-receiving region of a photodotector, for example, with proper alignment being made with respect to the latter.

In the drawings:

Fig. 1 is a sketch showing a light-emitting device or light receiving device with optical fiber according to one embodiment of the present invention;

Fig. 2 is a sketch of a light-emitting device or light receiving device;

Fig. 3 is a sketch showing an example of the conventional light-emitting device or light receiving device having an optical fiber as an integral component;

Fig. 4 shows a light-emitting element or light receiving element with optical fiber as installed in a small-size light transmitter or light receiving device; and

Fig. 5 is a graph plotting the results of actual measurement conducted to obtain the relationship between the radius of curvature of a bend in an optical fiber and the excess loss resulting from the fiber bending.

## DETAILED DESCRIPTION OF THE INVENTION

Fig. 1 is a sketch showing a light-emitting device or light receiving device with an optical fiber according to one embodiment of the present invention.

As shown in Fig. 1, an optical fiber 5 is inserted and fixed in a support 8 that is bent to a predetermined shape and the fiber 5 in the support 8 is fixed to a light-emitting diode or light detector in a splicer 4. The support 8 is made of a copper pipe having an inside diameter of 1 mm, an outside diameter of 2 mm and a length of 80 mm. The optical fiber 5 is a graded-index fiber that has a core diameter of 50 μm, a cladding diameter of 125 μm, and a numerical aperture (NA) of 0.2.

The device shown in Fig. 1 is fabricated by the following procedures: the optical fiber 5 is inserted into the support 8 which is made of the copper pipe having the dimensions specified above; the support is then bent to produce a radius of curvature of 20 mm; the fiber in the so bent support is fixed to the light-emitting diode, with a conventional fine adjustment table being used to establish alignment between the fiber and the emitting region (20 μm dia.) of the diode so as to provide a maximum optical output. The so fabricated device was found to produce an optical output that was comparable to the output achieved with a prior art light-emitting device having a straight optical fiber as an integral component.

In case of the light receiving device, the fiber in the so bent support is fixed to an InGaAs PIN photodiode, with a conventional fine adjustment table being used to establish alignment between the fiber and the light receiving region (100 μm dia.) of the photodiode so as to provide a maximum sensitivity of light reception. The so fabricated device was found to produce a sensitivity that was comparable to the sensitivity achieved with a prior art light receiving device having a straight optical fiber as an integral component.

A copper pipe is used as the support of optical fiber for the following two reasons: it has a reasonable degree of flexibility and can be readily bent; and the friction between the copper pipe and an optical fiber is so small that the latter will not be unduly strained by the pipe when it is being bent.

The radius of curvature of the bend in the support 8 is set to 20 mm which is commensurate with the size of the casing of a light transmitter or light receiving device with which the light-emitting element or light receiving element of the present invention is to be used. A smaller radius of curvature may be selected but then the bending stress that is imposed on the fiber itself is so great as to increase the possibility that the fiber is deteriorated or broken during prolonged use. Therefore, the radius of curvature of the bend in the support is advantageously set to a value of at least 20 mm. A radius of curvature that is 200 mm or larger may of course be used but such a large radius of curvature is not encompassed by the present invention because even a conventional light-emitting device with an optical fiber being aligned and fixed in a straight state incurs little drop in optical output or little reduction in sensitivity and only few advantages are envisaged during installation.

In order to prevent the occurrence of excess loss and from the viewpoint of easy installation in a small-size light transmitter, the radius of curvature of the bend to be produced in the support is preferably set to no more than 70 mm.

In the embodiment shown, the support for an optical fiber is made of a copper pipe but it should be understood that the support may be made of other materials such as stainless steel, aluminum, ceramics, and plastics. The shape of the support is not limited to a pipe, either, and it may be a plate-shape, a profile plate having a trough-shaped cross section, a polygonal bar, or may assume any other shapes that are capable of supporting and fixing the optical fiber in proper position.

As described in the foregoing pages, the light-emitting device with an optical fiber of the present invention has a preliminarily bent fiber aligned and fixed to a light-emitting diode, so that alignment of the diode can be established in accordance with the change in light-acceptance angle that has been introduced by fiber bending. Consequently, even if the optical fiber is bent sharply as in the case where a light-emitting device having the fiber as an integral component is installed in a small-size light transmitter, a maximum optical output is ensured by the light-emitting device. This enables the light transmitter to exhibit superior performance over the case where it employs a conventional light-emitting device with a bent optical fiber.

The light receiving device with an optical fiber of the present invention has a preliminarily bent fiber aligned and fixed to a photodetector, so that alignment of the photodetector can be established in accordance with the deviation in radiation pattern of light from the fiber end that has been introduced by fiber bending. Consequently, even if the optical fiber is bent sharply as in the case where a light receiving device having the fiber as an integral component is installed in a small-size light receiver, a maximum sensitivity is ensured by the light-receiving device. This enables the light receiver to exhibit superior performance over the case where it employs a conventional light receiving device with a bent optical fiber.

The optical fiber in the device of the present invention is also protected by the support and this offers the attendant advantage that the fiber situated at a portion close to the mechanical weal splicer 4 will not be overstrained during installation of the device and that this eliminates the chance of the occurrence of unexpected accident such as damage to the optical fiber.

Therefore, the light-emitting element or light receiving element with optical fiber of the present invention finds particular utility in a small-size light transmitter or light receiving device.

## Claims

1. A method of fabricating an optical device for transmitting light along a predetermined curved path, wherein
an optical fiber(5)is disposed within support(8), the optical fiber being adapted for guiding light entering a first end face to a second end face thereof,
**characterized in that**
the support(8)is bent into a shape corresponding to said predetermined curved path to produce a bent optical fiber (5), said curved path having a radius of curvature between 20 mm and 200 mm,
that the bent optical fibre(5)is disposed with its first end face thereof to face an optical element(2) having a region for transmitting light, and that the first end face of the optical fiber(5)for receiving light is aligned with region of the optical element(2)such that the optical output of the second end face of said optical fiber(5)is a maximum.

2. A method of fabricating an optical device for transmitting light along a predetermined curved path, wherein
an optical fiber(5)is disposed within a support(8),the optical fiber being adapted for guiding light entering a first end face to a second end face threof,
**characterized in that**
the support(8)is bent into a shape corresponding to said predetermined curved path to produce a bent optical fiber(5),said curved path having a radius of curvature between 20 mm and 200 mm,
that the bent optical fiber(5)is disposed with the second end face thereof such that it faces an optical element(2) having a region for receiving the light, and that the second end face of the optical fiber(5)is aligned such that region of the optical element(2) has a maximum light reception.

3. A method according to Claim 1 or 2 **charac-**

**terised in that** (as the support(8)) a copper pipe is used.

4. A method according to Claim 3 characterised in that a copper pipe is used having an inside diameter of 1 mm and an outside diameter of 2 mm and a length of 80 mm.

## Revendications

1. Procédé de fabrication d'un dispositif optique destiné à transmettre de la lumière suivant un trajet courbe prédéterminé, dans lequel
une fibre optique (5) est placée dans un support (8), la fibre optique étant destinée à guider la lumière entrant par une première face d'extrémité vers une seconde face d'extrémité de la fibre,
caractérisé en ce que
le support (8) est courbé à une configuration correspondant à celle du trajet courbe prédéterminé avec formation d'une fibre optique courbée (5), le trajet courbe ayant un rayon de courbure compris entre 20 et 200 mm, et
en ce que la fibre optique courbée (5) est placée avec sa première face d'extrémité en face d'un élément optique (2) ayant une région d'émission de lumière, et la première face d'extrémité de la fibre optique (5) destinée à recevoir la lumière est alignée sur cette région de l'étément optique (2) de manière que le signal optique de sortie de la seconde face d'extrémité de la fibre optique (5) soit maximal.

2. Procédé de fabrication d'un dispositif optique destiné à transmettre de la lumière suivant un trajet courbe prédéterminé, dans lequel
une fibre optique (5) est placée dans un support (8), la fibre optique étant destinée à guider la lumière entrant par une première face d'extrémité vers une seconde face d'extrémité de la fibre,
caractérisé en ce que
le support (8) est courbé à une configuration correspondant au trajet courbe prédéterminé afin qu'une fibre optique courbe (5) soit formée, te trajet courbe ayant un rayon de courbure compris entre 20 et 200 mm, et
la fibre optique courbée (5) est placée avec sa seconde face d'extrémité de manière qu'elle soit tournée vers un élément optique (2) ayant une région de réception de lumière, et la seconde face d'extrémité de la fibre optique (5) est alignée de manière que cette région de l'élément optique (2) donne une réception maximale de la lumière.

3. Procédé selon la revendication 1 ou 2, caractérisé en ce qu'un tube de cuivre est utilisé comme support (8).

4. Procédé selon la revendication 3, caractérisé en ce que le tube de cuivre utilisé a un diamètre interne de 1 mm, un diamètre externe de 2 mm et une longueur de 80 mm.

**Ansprüche**

1. Ein Verfauren zur Herstellung einer optischen Vorrichtung zur Übertragung von Licht längs eines vorbestimmten gekrümmten Weges, worin eine optische Faser (5) innerhalb eines Trägers (8) angeordnet ist, wobei die optische Faser zur Führung von in eine erste Endstirnfläche eintretenden Lichtes zu einer zweiten Endstirnfläche der optischen Faser vorgesehen ist, **dadurch gekennzeichnet,** daß der Träger (8) in eine Form gebogen ist, die dem vorbestimmten gekrümmten Weg entspricht,um eine gebogene optische Faser (5) herzustellen, wobei der gekrümmte Weg einen Krümmungsradius zwischen 20 und 200 mm aufweist, daß die gebogene optische Faser (5) angeordnet ist, um mit ihrer ersten Endstirnfläche einem optischen Element (2) gegenuberzuliegen, welches einen Bereich zur Lichtübertragung aufweist, und daß die erste Endstirnfläche der optischen Faser (5) für den Empfang von Licht zu jenem Bereich des optischen Elements (2) derart ausgerichtet ist, daß die optische Ausgangsgröße der zweiten Endstirnfläche der optischen Faser (5) ein Maximum ist.

2. Ein Verfahren zur Herstellung einer optischen Vorrichtung zur Übertragung von Licht längs eines vorbestimmten gekrümmten Weges, worin eine optische Faser (5) innerhalb eines Trägers (8) angeordnet ist, wobei die optische Faser zum Führen von in eine erste Endstirnfläche eintretenden Lichtes zu einer zweiten Endstirnfläche davon vorgesehen ist, **dadurch gekennzeichnet,** daß der Träger (8) in eine Form gebogen ist, die dem vorbestimmten gekrümmten Weg entspricht, um eine gebogene optische Faser (5) zu bilden, wobei der gekrümmte Weg einen Krümmungsradius zwischen 20 mm und 200 mm aufweist, daß die gebogene optische Faser (5) derart angeordnet ist, daß sie mit ihrer zweiten Endstirnfläche gegenüber einem optischen Element (2) liegt, das einen Bereich für den Empfang des Lichts aufweist, und daß die zweite Endstirnfläche der optischen Faser (5) derart ausgerichtet ist,daß jener Bereich des optischen Elements (2) einen maximalen Lichtempfang aufweist.

3. Ein Verfahren nach Anspruch 1 oder 2, **dadurch gekennzeichnet,** daß ein Kupferrohr als der Träger (8) verwendet wird.

4. Ein Verfahren nach Anspruch 3, **dadurch gekennzeichnet,** daß ein Kupferrohr verwendet wird, welches einen Innendurchmesser von 1 mm und einen Außendurchmesser von 2 mm und eine Länge von 80 mm aufweist.

FIG. 1

FIG. 2

FIG. 3
PRIOR ART

FIG. 4

FIG. 5

EXCESS LOSS (dB)

2.0

1.0

1/2R (1/mm)

0   0.01  0.02  0.03  0.04  0.05

R (mm)

50 40 30 20  15      10

BENDING RADIUS